**Europäisches Patentamt**

**European Patent Office**

**Office européen des brevets**

(19)

(11) Veröffentlichungsnummer : **0 379 490 B1**

(12) **EUROPÄISCHE PATENTSCHRIFT**

(45) Veröffentlichungstag der Patentschrift :
**18.03.92 Patentblatt 92/12**

(51) Int. Cl.⁵ : **F16H 57/02,** F16H 1/14,
F16C 35/06

(21) Anmeldenummer : **88907050.4**

(22) Anmeldetag : **27.07.88**

(86) Internationale Anmeldenummer :
**PCT/EP88/00679**

(87) Internationale Veröffentlichungsnummer :
**WO 89/01101 09.02.89 Gazette 89/04**

(54) ANORDNUNG EINES KEGELTRIEBES IN EINEM GETRIEBEGEHÄUSE.

(30) Priorität : **05.08.87 DE 3725911**

(43) Veröffentlichungstag der Anmeldung :
**01.08.90 Patentblatt 90/31**

(45) Bekanntmachung des Hinweises auf die
Patenterteilung :
**18.03.92 Patentblatt 92/12**

(84) Benannte Vertragsstaaten :
**AT DE FR GB IT NL SE**

(56) Entgegenhaltungen :
**DE-A- 2 460 448**

(56) Entgegenhaltungen :
**DE-A- 2 626 170**
**FR-A- 894 783**
**US-A- 2 022 290**
**US-A- 2 697 362**

(73) Patentinhaber : **ZF FRIEDRICHSHAFEN
Aktiengesellschaft
Löwentaler Strasse 100 Postfach 2520
W-7990 Friedrichshafen 1 (DE)**

(72) Erfinder : **BUCKSCH, Manfred
Prälat Lutz Strasse 24
W-7990 Friedrichshafen 5 (DE)**
Erfinder : **BAUKNECHT, Gert
Schulstrasse 27a
W-7997 Immenstaad (DE)**

EP 0 379 490 B1

EP 0 379 490 B1

## Beschreibung

Die Erfindung bezieht sich auf eine Anordnung eines Kegeltriebes in einem Getriebegehäuse nach dem Oberbegriff des Anspruches 1.

Bei einem Kegeltrieb der im Oberbegriff des Anspruches 1 aufgeführten Gettung (DE-A-26 26 170) treibt ein auf einer Kegelritzelwelle angeordnetes Kegelritzel ein Tellerrad eines Differentialgetriebes an. Die Lagerung der Kegelritzelwelle im Getriebegehäuse erfolgt mittels eines zweireihigen Schrägkugellagers, das zur Aufnahme der aus dem Kegeltrieb resultierenden Axialkräfte durch Verschraubung seines Außenringes mit dem Getriebegehäuse axial abgestützt ist. Die Einstellung des Kegelritzels zum Tellerrad erfolgt dabei durch eine Ausgleichscheibe, die zwischen dem Außenring des Schrägkugellagers und dem Getriebegehäuse angeordnet ist. Während des Betriebs kann durch Setzerscheinungen Axialspiel auftreten, das zu Eingriffsstörungen und Geräuschen im Kegeltrieb führt. Derartiges Spiel läßt sich durch ein Austauschen der Ausgleichscheibe reduzieren. Der Kegeltrieb weist infolge der Verschraubung des Wälzlagers relativ großvolumige Abmessungen auf.

Aus der US-A 26 97 362 ist ein Kegeltrieb mit identisch ausgebildeten Kegelritzeln bekannt. Im Schnittpunkt der Längsmittelachsen der beiden Kegelritzel ist im Getriebegehäuse eine Kugel befestigt, an der mittels Axiallagern eine axiale Abstützung der beiden Kegelritzel erfolgt. In den dieser Kugel abgewandten Axialrichtungen sind die beiden Kegelritzel über Kugellager im Getriebegehäuse abgestützt, deren Außenring jeweils über Muttern im Getriebegehäuse in axialer Richtung lagefixiert sind. Jede dieser beiden Muttern ist durch einen in eine Ringnut des Getriebegehäuses eingreifenden Sprengring gesichert. Diese Lagerung der Kegelritzel bzw. Kegelritzelwellen ist konstruktiv aufwendig und nur für identische Kegelritzel eines einfachen Winkeltriebes möglich. Aus der FR-A 894 783 ist eine Anordnung eines Kugellagers in einer Gehäusebohrung bekannt, das in axialer Richtung über einen Sprengring fixiert ist. Für die Lage der den Sprengring aufnehmenden Nut sollen dabei größere Toleranzen zulässig sein, weil ein durch ungenaue Lage der Nut auftretendes Axialspiel durch eine Keilwirkung des Sprengringes ausgeglichen werden soll. Das Kugellager dient zur radialen Lagerung einer Welle im Gehäuse.

Der Erfindung liegt die Aufgabe zugrunde, die gattungsgemäße Anordnung weiter zu bilden und einen kompakt ausgebildeten Kegeltrieb zu schaffen, bei dem ein selbsttätiger Ausgleich des aufgrund von Setzerscheinungen auftretenden Axialspiels erfolgt.

Diese Aufgabe wird an einem Kegeltrieb der genannten Gattung durch die im Kennzeichen des Anspruchs 1 aufgeführten Merkmale gelöst. Durch die Lagefixierung des Wälzlagers mittels eines Sprengringes werden die Herstellung des Getriebegehäuses und die Montage des Kegeltriebes erheblich vereinfacht. Die zumindest abschnittsweise konische Flanke des Sprengringes bildet gemeinsam mit einer korrespondierenden Anlagefläche der Ringnut eine schiefe Ebene, so daß zwischen dem Außenring des Wälzlagers und dem Sprengring auftretendes Spiel selbsttätig ausgeglichen wird. Dabei steht dem Sprengring zur Aufweitung ein radiales Spiel in der Ringnut zur Verfügung.

Weitere vorteilhafte Ausgestaltungen der Erfindung sind in den Unteransprüchen 2 bis 4 beschrieben. Nach Anspruch 2 ist der Sprengring an seiner Flanke, mit der er die vom Wälzlager übertragenen Axialkräfte in der Ringnut überträgt, konisch ausgebildet, während sowohl an der gegenüberliegenden Flanke als auch radial Spiel vorgesehen ist. Führen Setzerscheinungen zu einem Spiel des Außenringes, so kann der Sprengring auf der in der Ringnut gebildeten schiefen Ebene durch Aufweitung dieses Spiel ausgleichen.

Alternativ dazu ist nach Anspruch 3 die Bildung einer schiefen Ebene aufgrund konischer Flanke zwischen dem Sprengring und dem Außenring des Wälzlagers vorgesehen. Bei Verwendung eines genormten Wälzlagers mit eben ausgebildeter Flanke des Außenringes kann gemäß Anspruch 4 die konische Anlagefläche an einem separaten Zwischenring geschaffen werden.

Die Erfindung ist nicht auf die Merkmalskombination der Ansprüche beschrankt. Für den Fachmann ergeben sich weitere sinnvolle Kombinationsmöglichkeiten von Ansprüchen und einzelnen Anspruchsmerkmalen aus der Aufgabenstellung.

Zur weiteren Erläuterung der Erfindung wird auf die Zeichnung verwiesen, in der ein Ausführungsbeispiel dargestellt ist. Es zeigen:

Fig. 1 einen Längsschnitt durch ein Getriebegehäuse im Bereich eines Kegeltriebs und

Fig. 2 einen vergrößerten Ausschnitt II aus Fig. 1 im Bereich eines als axiale Lagefixierung dienenden Sptengringes.

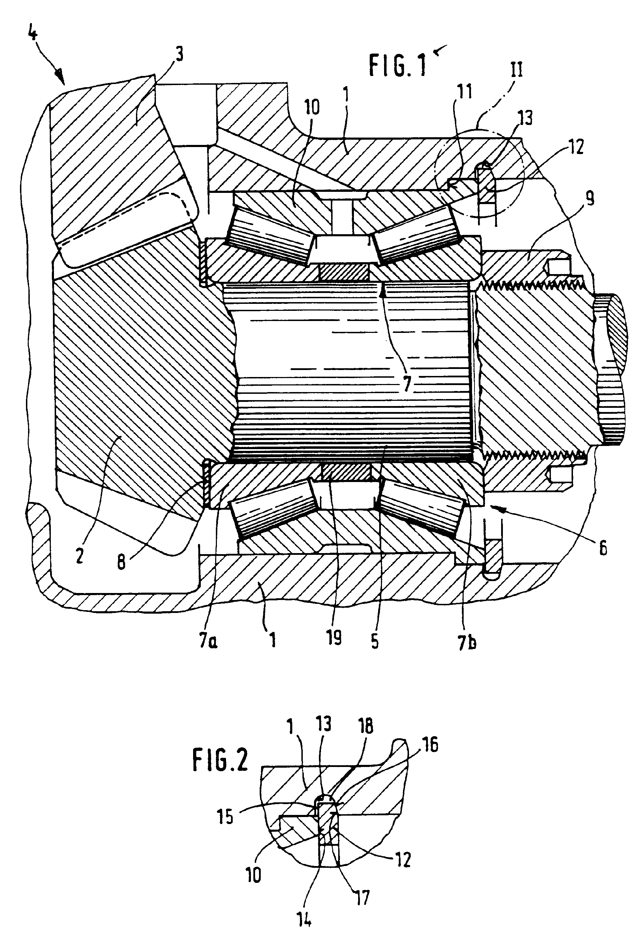

In den Fig. 1 und 2 ist, soweit datgestellt, mit 1 ein Getriebegehäuse bezeichnet, in dem ein aus einem Kegelritzel 2 und einem Tellettad 3 bestehender Kegeltrieb 4 gelagert ist. Der antrieb des Kegelritzels 2 erfolgt über eine Kegeltitzelwelle 5, die im Getriebegehäuse 1 über ein als Doppelkegeltollenlager ausgeführtes Wälzlager 6 gelagert ist. Ein Innenring 7 dieses Wälzlagers 6 ist aus Ringen 7a und 7b, die einen Distanzring 19 einschließen, hetgestellt. Zu seiner axialen Lagefixierung auf der Kegelritzelwelle 5 stützt sich der Innenring 7

2

unter Zwischenfügung einer Distanzscheibe 8 und durch Verspannung über eine Mutter 9 an dem Kegeltitzel 2 ab. Ein Außenring 10 des Wälzlagers 6 ist axial im Getriebegehäuse 1 einerseits festgelegt über einen Anschlag 11 und andererseits über einen Sprengring 12, der in eine im Getriebegehäuse angeordnete Ringnut 13 eingreift. Zur näheren Erläuterung der erfindungsgemäßen Ausbildung des Sprengringes 12 und der Ringnut 13 wird auf die Fig. 2 verwiesen.

Nach der Fig. 2 ist der Sprengring 12 an seiner einen Flanke 14, an der sich der Außenring 10 abstützt, eben ausgebildet, wobei diese Flanke 14 zur Ringnut 13 hin ein axiales Spiel 15 aufweist. Eine gegenüberliegende Flanke 16 des Sprengringes 12 ist konisch ausgebildet und liegt an einer ebenfalls konisch ausgebildeten Anlagefläche 17 der Ringnut an. Außerdem weist der Sprengring 12 gegenüber dem Grund der Ringnut ein radiales Spiel 18 auf.

Tritt aufgrund von Setzerscheinungen Axialspiel zwischen dem Außenring 10 des Wälzlagers 6 sowie dem Anschlag 11 oder dem Sprengring 12 auf, so gleicht der Sprengring 12 dieses Spiel durch radiale Aufweitung und gleichzeitige axiale Verschiebung über die konische Flanke 16 aus.

## Patentansprüche

1. Anordnung eines Kegeltriebes (4) in einem Getriebegehäuse (1), wobei zumindest eine ein Kegelritzel (2) aufnehmende Kegelritzelwelle (5) im Getriebegehäuse (1) über zumindest ein Wälzlager (6) radial und axial geführt ist, dessen Außenring (10) axial einerseits in Richtung des Kegelritzels (2) an einem Anschlag (11) des Getriebegehäuses (1) anliegt, während andererseits eine axiale Lagefixierung zwischen Außenring (10) und Getriebegehäuse (1) angreift, und dessen auf der Kegelritzelwelle (5) angeordneter Innenring (7) in axialer Richtung mittels einer Mutter (9) am Kegelritzel (2) festgelegt ist, dadurch **gekennzeichnet**, daß als axiale Lagefixierung ein in einer Ringnut (13) des Getriebegehäuses (1) angeordneter, am Außenring (10) anliegender Sprengring (12) dient, dessen eine Flanke (16) aufgrund einer zumindest abschnittsweise konischen Ausbildung gemeinsam mit einer korrespondierenden Anlagefläche (17) eine schiefe Ebene bildet, wobei der Sprengring (12) mit radialem Spiel (18) in die Ringnut (13) eingesetzt ist.

2. Anordnung eines Kegeltriebes nach Anspruch 1, dadurch **gekennzeichnet**, daß die konische Flanke (16) der Außenring (10) abgewandt ist und mit einer Anlagefläche (16) dem Ringnut zusammenwirkt, während zwischen der gegenüberliegenden Flanke (14) und dem korrespondierenden Abschnitt der Ringnut axiales Spiel vorgesehen ist.

3. Anordnung eines Kegeltriebes nach Anspruch 1, dadurch **gekennzeichnet**, daß die konische Flanke dem Außenring (10) zugewandt ist und mit einer Anlagefläche des Außenringes (10) zusammenwirkt.

4. Anordnung eines Kegeltriebes nach einem der Ansprüche 1 oder 3, dadurch **gekennzeichnet**, daß zwischen dem Außenring (10) und dem Sprengring (12) ein die konische Anlagefläche bildender Zwischenring angeordnet ist.

## Claims

1. Arrangement of a bevel-gear drive (4) in a gearbox (1), in which at least one bevel-gear pinion shaft (5), which holds a bevel-gear pinion (2), is radially and axially guided in the gearbox (1) via at least one roller bearing (6), whose outer race (10) bears axially against a stop (11) of the gearbox (1) on one side in the direction of the bevel-gear pinion (2), while on the other side its position is axially fixed between the outer race (10) and the gearbox (1), and whose inner race (7), which is arranged on the bevel-gear pinion shaft (5), is secured to the bevel-gear pinion (2) in the axial direction by means of a nut (9), characterised in that a circlip (12), which is arranged in a ring groove (13) in the gearbox (1) and bears against the outer race (10), serves as an axial position fixing means, one flank (16) of which circlip, as it is conical at least in sections, forms with a corresponding contact surface (17) an inclined plane, the circlip (12) being inserted in the ring groove (13) with radial play (18).

2. Arrangement of a bevel-gear drive according to claim 1, characterised in that the conical flank (16) is distant from the outer race (10) and co-operates with a contact surface (16) of the ring groove, while there is axial play between the opposite flank (14) and the corresponding section of the ring groove.

3. Arrangement of a bevel-gear drive according to claim 1, characterised in that the conical flank faces the outer race (10) and co-operates with a contact surface of the outer race (10).

4. Arrangement of a bevel-gear drive according to claim 1 or 3, characterised in that an intermediate ring, which forms the conical contact surface, is arranged between the outer race (10) and the circlip (12).

## Revendications

1. Agencement d'un engrenage conique (4) dans un carter d'engrenage (1), dans lequel un arbre (5) portant un pignon conique (2) est guidé radialement et axialement dans le carter (1) au moyen d'au moins un roulement à rouleaux (6) dont la bague extérieure (10) est appuyée axialement d'un côté, en direction du pignon conique (2), contre une butée (11) ménagée sur le carter (1), tandis que de l'autre côté un moyen de fixation axiale est engagé entre la bague extérieure (10) et le carter (1), et dont la bague intérieure (7) montée sur l'arbre (5) est bloquée en direction axiale contre le pignon conique (2) au moyen d'un écrou (9), **caractérisé** en ce que le moyen de fixation axiale est formé par un anneau-ressort (12) monté dans une rainure annulaire (13) du carter (1) et appuyé contre la bague extérieure (10), cet anneau-ressort étant pourvu d'un flanc (16) qui forme un plan d'appui oblique en raison d'une configuration au moins partiellement conique en combinaison avec une surface d'appui correspondante ( 17), l'anneau-ressort (12) étant engagé avec un jeu radial (18) dans la rainure annulaire (13).

2. Agencement selon la revendication 1, **caractérisé** en ce que le flanc conique (16) se trouve du côté opposé à la bague extérieure (10) et coopère avec une surface d'appui (16) de la rainure annulaire, tandis qu'un jeu axial est prévu entre le flanc opposé (14) et la partie correspondante de la rainure annulaire.

3. Agencement selon la revendicatiom 1, **caractérisé** en ce que le flanc conique se trouve du côté de la bague extérieure (10) et coopère avec une surface d'appui de la bague extérieure (10).

4. Agencement selon l'une des revendications 1 ou 3, **caractérisé** en ce qu'un anneau intermédiaire formant la surface d'appui conique est disposé entre la bague extérieure (10) et l'anneau-ressort (12).

FIG. 1

FIG. 2